# NEUE EUROPÄISCHE PATENTSCHRIFT

(11) **EP 1 952 046 B2**
(45) Veröffentlichungstag und Bekanntmachung des Hinweises auf die Entscheidung über den Einspruch: **10.03.2021**
(45) Hinweis auf die Patenterteilung: 02.05.2012
(21) Anmeldenummer: 06818800.2
(22) Anmeldetag: 24.11.2006
(51) Int. Cl.: F16K 1/44

(54) **DOPPELSITZVENTIL**
DOUBLE SEAT VALVE
SOUPAPE A DOUBLE SIEGE

(30) Priorität: 25.11.2005 DE 102005057103
(43) Veröffentlichungstag der Anmeldung: 06.08.2008
(73) Patentinhaber: SUEDMO HOLDING GMBH, 73469 Riesbuerg (DE)
(72) Erfinder: DEGER, Werner, 73467 Kirchheim (DE)
(74) Vertreter: Witte, Weller & Partner Patentanwälte mbB
(86) Internationale Anmeldenummer: PCT/EP2006/011281
(87) Internationale Veröffentlichungsnummer: WO 2007/059986

(56) Entgegenhaltungen:
- EP-A1- 0 646 741
- WO-A-92/21900
- WO-A-98/41786
- DE-U1- 9 320 801
- US-A- 5 806 554
- Betriebsanleitung VARIVENT - Doppelventil M N Ausgabe 07/99, Sach-NR 430-155 (49Seiten)
- Betriebsanleitung VARIVENT - Doppelsitzventil M N/M O, GEA Liquid Processing Division, Tuchenhagen, Ausgabe 2002-06, Sach-NR 430-155 (2 Seiten)

## Beschreibung

Die Erfindung betrifft eine Ventilvorrichtung zur Trennung feindlicher Medien, mit einem Gehäuse, das Anschlussstutzen eines jeweils bestimmten Öffnungsquerschnitts für zumindest zwei Rohrleitungen aufweist, die im Gehäuse über eine Verbindungsöffnung eines bestimmten Öffnungsquerschnitts miteinander kommunizieren können, mit einer Ventilanordnung zum wahlweisen Verschließen und Freigeben der Verbindungsöffnung, die zumindest einen Ventilsitz und zumindest einen Ventilteller aufweist, wobei der zumindest eine Ventilteller eine mit dem zumindest einen Ventilsitz zusammenwirkende Dichtfläche und einen mittleren Verbindungsabschnitt aufweist, der mit einem Ventilschaft verbunden ist, und wobei der zumindest eine Ventilteller einen sich nach unten erstreckenden Rohrfortsatz aufweist, der dem Abfluss eines Mediums dient, wobei der zumindest eine Ventilteller im Bereich zwischen der Dichtfläche und dem Verbindungsabschnitt einen Drainageabschnitt mit mehreren Drainageöffnungen aufweist, wobei der Gesamtöffnungsquerschnitt der mehreren Drainageöffnungen an den Öffnungsquerschnitt der Verbindungsöffnung und/oder an den Öffnungsquerschnitt zumindest eines der Anschlussstutzen heranreicht oder größer ist.

Eine Ventilvorrichtung der eingangs genannten Art ist aus dem Dokument WO 98/41786 A bekannt.

Ventilvorrichtungen dieser Art werden beispielsweise in der Lebensmittelindustrie zum Herstellen von Produkten wie H-Milch, Joghurt und dergleichen eingesetzt.

Bei derartigen Ventilvorrichtungen bestehen hohe Anforderungen an die sichere Trennung der durch die zumindest zwei Rohrleitungen geführten Medien. Die Ventilanordnung zum wahlweisen Verschließen und Freigeben der Verbindungsöffnung, über die die beiden Rohrleitungen miteinander kommunizieren können, muss daher in der Schließstellung eine sichere Abdichtung der Verbindungsöffnung gewährleisten. Außerdem muss die Ventilanordnung, einschließlich des zumindest einen Ventilsitzes, gründlich reinigbar und insbesondere sterilisierbar sein.

Um diesen Anforderungen gerecht zu werden, werden Ventilvorrichtungen der eingangs genannten Art als Doppelsitzventile ausgestaltet.

Bei einer aus EP-A-0 834 689 bekannten Ventilvorrichtung weist die Ventilanordnung an der Verbindungsöffnung zwischen den Anschlussstutzen der zumindest zwei Rohrleitungen zwei Ventilsitze für zwei Ventilteller auf, einen oberen Ventilteller und einen unteren Ventilteller. Zum Freigeben der Verbindungsöffnung werden der obere Ventilteller und der untere Ventilteller nach unten verfahren, das heißt die bekannte Ventilvorrichtung ist ein nach unten öffnendes Doppelsitzventil.

Zwischen den beiden Ventiltellern befindet sich ein Leckageraum, der über einen Rohrfortsatz am unteren Ventilteller einen Abfluss besitzt. In der Schließstellung der Ventilanordnung, in der die Verbindungsöffnung dicht geschlossen sein muss, kann über einen Austritt eines Mediums aus dem Rohrfortsatz eine Leckage und damit eine Fehlfunktion der Ventilanordnung in deren Schließstellung detektiert werden.

Die beiden Ventilteller sind nicht nur gemeinsam verfahrbar, sondern auch relativ zueinander. Zum Reinigen und Sterilisieren der Ventilanordnung im Bereich des Leckageraums wird beispielsweise der obere Ventilteller nach oben angelüftet, so dass er mit seinem Ventilsitz außer Eingriff kommt. Der untere Ventilteller bleibt dabei in seiner Schließstellung. Über die obere Rohrleitung kann nun ein Reinigungsmedium unter hohem Druck, der beispielsweise bei 3 bar liegen kann, in den Leckageraum geleitet werden. Das Reinigungsmedium muss nun durch den unteren Ventilteller, der weiterhin dicht an seinem Ventilsitz anliegt, abgeführt werden, wozu der untere Ventilteller einen Drainageabschnitt aufweist, der zumindest eine Drainageöffnung aufweist. Bei der bekannten Ventilvorrichtung sind eine Mehrzahl kleiner Öffnungen vorgesehen, deren Gesamtquerschnitt weniger als die Hälfte des Öffnungsquerschnitts jedes der Anschlussstutzen ausmacht. Auch der Rohrfortsatz des unteren Ventiltellers, durch den das Reinigungsmedium abfließt, weist einen Öffnungsquerschnitt auf, der ebenfalls allenfalls halb so groß ist wie der Öffnungsquerschnitt jedes der Anschlussstutzen. Außerdem ist der Gesamtquerschnitt der Öffnungen im unteren Ventilteller auch deutlich geringer als der Öffnungsquerschnitt der Verbindungsöffnung.

Wenn nun, wie zuvor beschrieben, der Leckageraum zwischen den beiden Ventiltellern mit einem Reinigungsmedium hohen Druckes, beispielsweise durch den oberen Anschlussstutzen hindurch, beaufschlagt wird, kann das Reinigungsmedium durch die Drainageöffnungen im Drainageabschnitt nicht in dem Maße abfließen, wie es durch den Anschlussstutzen zugeführt wird. Die Folge ist, dass sich im Leckageraum ein zusätzlicher Überdruck ausbildet, der dazu führen kann, dass der untere Ventilteller von seinem Ventilsitz bewegt wird, so dass das Reinigungsmedium in die zweite Rohrleitung gelangt, was jedoch auf jeden Fall vermieden werden muss.

Um dies zu vermeiden, müsste entweder der Leckageraum zur Reinigung mit einer geringeren Durchflussrate und geringerem Druck beaufschlagt werden, was jedoch die Reinigungswirkung verschlechtern kann, oder der untere Ventilteller bzw. der obere Ventilteller, je nachdem ob das Reinigungsmedium durch die untere oder obere Rohrleitung zugeführt wird, müsste mit einer entsprechenden zusätzlichen Haltekraft sicher in der Schließstellung gehalten werden.

Die Forderung neuerer Standards geht dahin, dass der maximale Querschnitt jedes Anschlussstutzens für die Rohrleitung etwa der Querschnittsöffnung der Leckageöffnung des unteren Ventiltellers entsprechen muss. Dies könnte dadurch umgesetzt werden, dass der Öffnungsquerschnitt der Anschlussstutzen verringert wird, was jedoch die Produktivität einer Vorrichtung, in der eine solche Ventilvorrichtung eingebaut ist, vermindert. Die zuvor genannte Forderung wird von der bekannten Ventilvorrichtung nicht erfüllt.

Eine Lösung dieses Problems durch Vergrößerung des Gesamtöffnungsquerschnitts der Drainageöffnungen im unteren Ventilteller gestaltet sich jedoch dadurch schwierig, dass der untere Ventilteller einen mittleren Verbindungsabschnitt aufweist, über den der untere Ventilteller mit einem Ventilschaft verbunden ist, der dem Bewegungsantrieb des unteren Ventiltellers dient. Eine Vergrößerung des Gesamtöffnungsquerschnitts des Drainageabschnitts des unteren Ventiltellers würde daher zwangsläufig zu einer Durchmesservergrößerung des unteren Ventiltellers führen, was jedoch unerwünscht ist.

Aus dem eingangs genannten Dokument WO 98/41786 A ist ein Doppelsitzventil bekannt, das einen oberen Ventilteller und einen unteren Ventilteller aufweist. Der untere Ventilteller weist eine erste Dichtung, die dem oberen Ventilteller zugewandt ist, und axial nach unten beabstandet eine zweite Dichtung auf, wobei zwischen den beiden Dichtungen eine Durchtrittsöffnung für Leckageflüssigkeit vorhanden ist. Der untere Ventilteller weist eine weitere Leckagedurchtrittsöffnung auf. Leckage aus dem Leckageraum wird durch einen rohrförmigen Fortsatz des unteren Ventiltellers in die Umgebung abgeführt. Um, wie dort beschrieben ist, dem sogenannten US-amerikanischen "3A-Standard" und den "FDA-Regularien" zu genügen, wird vorgeschlagen, die eben erwähnten Durchlassöffnungen derart zu dimensionieren, dass diese Forderungen erfüllt sind, indem sie derart auszuführen sind, dass sie einen insgesamt mindestens dem Nennquerschnitt des größten des an das Ventil angeschlossenen Rohres entsprechenden Durchschnittsquerschnitt aufweisen. Die Durchtritsöffnung in dem unteren Ventilteller erstreckt sich dabei orthogonal zur Dichtfläche, die durch die Dichtungen des unteren Ventiltellers aufgespannt wird.

In dem Dokument US 5 806 554 A ist ein Doppelsitzventil beschrieben, bei dem der zweite Ventilteller einen rohrförmigen Fortsatz aufweist, der nach innen einen Teil eines Verbindungsweges begrenzt, der auf einen Durchflussquerschnitt unmittelbar nach dem Leckagehohlraum vergrößert ist, um den für den Leckageraum verfügbaren Raum zu vergrößern.

Aus dem Dokument EP 0 646 741 A1 ist ein Doppelsitzventil bekannt, das einen ersten Ventilteller und einen zweiten Ventilteller aufweist. Ein damit vergleichbares Doppelsitzventil ist aus dem Dokument WO 92/21900 A bekannt.

Schließlich offenbart DE 93 20 801 U1 ein Doppelsitzventil mit zwei relativ zueinander bewegbaren Ventiltellern, wobei eine hohlzylinderförmige Ventilstange des einen Ventiltellers durch einen Faltenbalg gebildet wird, der einerseits mit diesem Ventilteller und andererseits auf der Seite der Durchführung der Ventilstange des anderen Ventiltellers durch das Ventilgehäuseteil mit dieser verbunden ist.

Der Erfindung liegt daher die Aufgabe zugrunde, eine Ventilvorrichtung der eingangs genannten Art dahingehend weiterzubilden, dass ohne Durchmesservergrößerung der Ventilanordnung beziehungsweise bei möglichst schmalbauender Ventilanordnung und ohne Reduzierung des Öffnungsquerschnitts der Anschlussstutzen die Forderung nach einem größeren Abflussquerschnitt des Ventiltellers erfüllt werden kann.

Erfindungsgemäß wird diese Aufgabe hinsichtlich der eingangs genannten Ventilvorrichtung durch die Merkmale des Anspruchs 1 gelöst.

Bei der erfindungsgemäßen Ventilvorrichtung wird durch die Schrägstellung des Drainageabschnitts zur durch die Dichtfläche des zumindest einen Ventiltellers aufgespannten Ebene eine Vergrößerung der Fläche des Drainageabschnitts herbeigeführt. Der Drainageabschnitt des Ventiltellers weist mit anderen Worten eine axiale Komponente auf, die es je nach Schrägstellung des Drainageabschnitts ermöglicht, den Gesamtöffnungsquerschnitt der mehreren Drainageöffnungen an den Öffnungsquerschnitt des oder der Anschlussstutzen oder der Verbindungsöffnung anzupassen, ohne dass der Durchmesser des Ventiltellers und damit die Ventilanordnung als Ganzes vergrößert oder der Öffnungsquerschnitt der Anschlussstutzen verringert werden muss. Durch die Schrägstellung des Drainageabschnitts steht ein größerer Raum für die Drainageöffnungen zur Verfügung. Auf diese Weise wird bei der Zuführung eines Reinigungsmediums durch den entsprechenden Anschlussstutzen in den Leckageraum hinsichtlich Zufuhr und Abfuhr des Reinigungsmediums durch den Ventilteller eine im Wesentlichen ausgeglichene Bilanz erreicht, wodurch vermieden wird, dass sich im Leckageraum zusätzlich zum Druck des Reinigungsmediums ein noch höherer Druck aufbauen kann. Mit der erfindungsgemäßen Ventilvorrichtung kann die oben genannte Forderung, dass der maximale Einzelöffnungsquerschnitt der Anschlussstutzen nicht größer als der Leckagequerschnitt ist, bei andererseits kleinem Durchmesser des Ventiltellers und des Rohrfortsatzes erfüllt werden.

Erfindungsgemäß weist der Drainageabschnitt des zumindest einen Ventiltellers mehrere Drainageöffnungen auf, die durch eine entsprechende Anzahl an Speichen getrennt sind, die vorzugsweise gleichmäßig verteilt angeordnet sind.

Die Speichen haben dabei lediglich die Funktion, die Dichtfläche des Ventiltellers, die üblicherweise ringförmig ausgebildet ist, mit dem Verbindungsabschnitt zu verbinden, das heißt diesen zu tragen. Die Speichen sind vorzugsweise mit an diese Funktion angepasster geringer Materialstärke ausgeführt.

Bevorzugt ist es dabei, wenn der Gesamtöffnungsquerschnitt der Drainageöffnungen des zumindest einen Ventiltellers von dein Öffnungsquerschnitt des zumindest einen der Anschlussstutzen und/oder der Verbindungsöffnung nicht mehr als etwa 20 %, vorzugsweise nicht mehr als 10 %, weiter vorzugsweise nicht mehr als 5 % nach unten abweicht.

Im Rahmen der Erfindung kann der Gesamtöffnungsquerschnitt in den zuvor genannten Bereichen kleiner, gleich oder größer als der Öffnungsquerschnitt zumindest eines der Anschlussstutzen sein, wobei jedoch vorzugsweise der Gesamtöffnungsquerschnitt der Drainageöffnungen eher größer als kleiner als der Öffnungsquerschnitt zumindest eines der Anschlussstutzen und/oder der Verbindungsöffnung ist.

Der Drainageabschnitt des zumindest einen Ventiltellers erstreckt sich in Richtung von dem Rohrfortsatz weg.

Durch diese Maßnahme wird zwar die axiale Baulänge des Ventiltellers erhöht, was jedoch nicht nachteilig ist, da im selben Maße der Ventilschaft, mit dem der Ventilteller verbunden ist, verkürzt werden kann.

In einer weiteren bevorzugten Ausgestaltung ist der Drainageabschnitt des zumindest einen Ventiltellers konisch ausgebildet.

Der Vorteil dieser Maßnahme besteht darin, dass der Ventilteller aufgrund seiner geometrisch einfachen Form leicht herstellbar ist.

In der bevorzugten Ausgestaltung weist der zumindest eine Ventilteller zumindest drei Drainageöffnungen auf, die durch zumindest drei Speichen getrennt sind, die vorzugsweise im Winkelabstand von 120° angeordnet sind.

Das Vorsehen von drei Speichen mit entsprechend drei Drainageöffnungen führt einerseits zu einer ausreichenden Stabilität der Verbindung des Verbindungsabschnitts mit der Dichtfläche, andererseits gewährleistet diese Ausgestaltung einen großen Raum für die Drainageöffnungen im Sinne einer hohen Abflusskapazität durch den Ventilteller.

Der Neigungswinkel des Drainageabschnitts des zumindest einen Ventiltellers zu der von der Dichtfläche aufgespannten Ebene beträgt zumindest 30°.

Die Schrägstellung des Drainageabschnitts bezüglich der zuvor genannten Ebene wird entsprechend im Sinne eines maximalen Gesamtöffnungsquerschnitts der Drainageöffnung(en) gewählt, und kann praktisch auch bis an 90° gehen. Sinnvollerweise wird sich der Neigungswinkel zum einen an dem zu erreichenden Gesamtöffnungsquerschnitt der Drainageöffnungen, andererseits an dem Herstellungsaufwand bei der Herstellung des Ventiltellers orientieren.

In einer weiteren bevorzugten Ausgestaltung reicht der Öffnungsquerschnitt des Rohrfortsatzes des zumindest einen Ventiltellers zumindest im Wesentlichen an den Öffnungsquerschnitt zumindest eines der Anschlussstutzen und/oder der Verbindungsöffnung heran oder ist größer als dieser, und weicht von diesem vorzugsweise um nicht mehr als 20 % nach unten ab.

Bei der bekannten Ventilvorrichtung weist der untere Ventilteller zwar auch einen Rohrfortsatz auf, der dieser Forderung entsprechen würde, jedoch dient dieser Rohr-fortsatz nicht dem Abfluss des Leckage- oder Reinigungsmediums, sondern dazu weist der bekannte Ventilteller mittig einen wesentlich dünneren Rohrfortsatz auf, der die zuvor genannte Forderung nicht erfüllt.

Im Sinne der vorliegenden Erfindung trägt auch der wie vorstehend beschriebene vergrößerte Öffnungsquerschnitt des Rohrfortsatzes als Abfluss für ein Medium dazu bei, ein Druckaufbau im Leckageraum zu vermeiden.

Die Ventilanordnung weist einen zweiten Ventilsitz und einen zweiten Ventilteller auf, wobei der zweite Ventilsitz und der erste Ventilsitz an der Verbindungsöffnung ausgebildet sind, und der zweite Ventilteller ist oberhalb des ersten Ventiltellers angeordnet und weist keine Drainageöffnung auf.

Mit dieser Ausgestaltung ergibt sich eine Doppelsitz-Ventilvorrichtung mit einem Leckageraum zwischen den beiden Ventiltellern, und die Ventilvorrichtung ist insgesamt als eine nach unten öffnende Ventilvorrichtung geeignet.

In diesem Zusammenhang und in Verbindung mit der zuvor genannten Ausgestaltung, wonach sich der Drainageabschnitt des zumindest einen Ventiltellers in Richtung von dem Rohrfortsatz weg erstreckt, erstreckt sich der zweite Ventilteller von seiner Mitte zu seiner Dichtfläche schräg nach unten.

Hierbei ist von Vorteil, dass sich der zweite Ventilteller an die Form des zumindest einen Ventiltellers anpasst und eine in axialer Richtung vorteilhaft kurzbauende Ventilanordnung geschaffen wird.

Im Sinne der vorgenannten axial kurzbauenden Bauweise der Ventilanordnung ist es weiterhin bevorzugt, wenn der zweite Ventilteller im Wesentlichen komplementär zu dem Drainageabschnitt des ersten Ventiltellers ausgebildet ist.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Ein Ausführungsbeispiel der Erfindung ist in der Zeichnung dargestellt und wird in Bezug auf diese hiernach näher beschrieben. Es zeigen:
- Figur 1a) und b): zusammen eine Ventilvorrichtung in einer Gesamtdarstellung in Seitenansicht, wobei Figur 1a) die Ventilvor- richtung in einem Betriebszustand zeigt, in dem die Ventilanordnung geschlossen ist, und Figur 1b) die Ventilvorrichtung in einem Betriebszustand zeigt, in dem die Ventilanordnung vollständig geöffnet ist;
- Figur 2: eine perspektivische Seitenansicht eines Ventiltellers der Ventilvorrichtung in Figur 1;
- Figur 3: den Ventilteller in Figur 2 in einer perspektivischen Ansicht schräg von oben;
- Figur 4: eine Längsschnittdarstellung des Ventiltellers in Figuren 2 und 3 in einem Schnitt entlang der Linie IV-IV in Figur 5; und
- Figur 5: den Ventilteller in Figuren 2 bis 4 in einer Draufsicht.

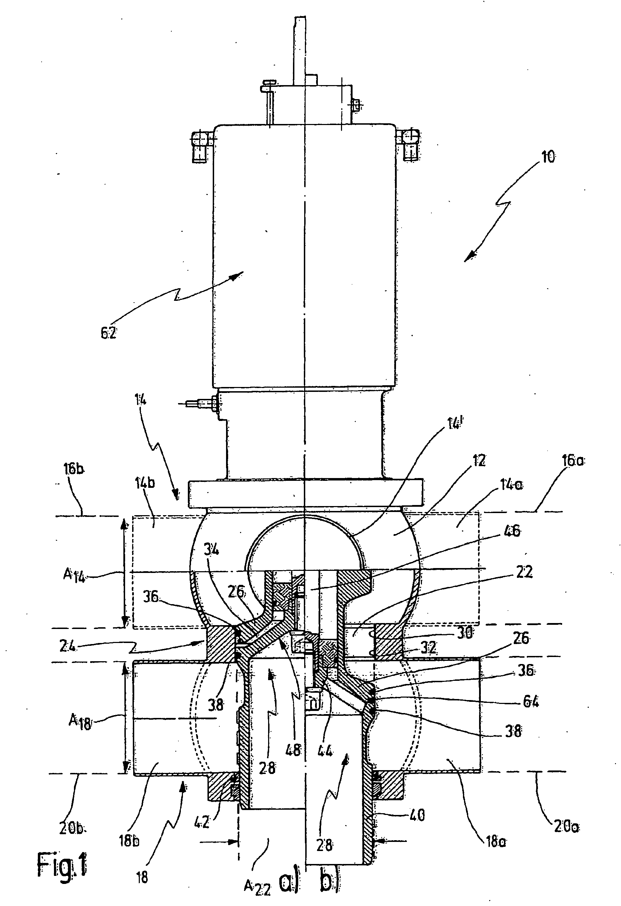

In Figur 1 ist eine mit dem allgemeinen Bezugszeichen 10 versehene Ventilvorrichtung zur Trennung feindlicher Medien dargestellt. Die Ventilvorrichtung 10 wird beispielsweise in einer lebensmitteltechnologischen Anlage, die der Herstellung von Lebensmitteln dient, eingesetzt.

Die Ventilvorrichtung 10 weist ein Gehäuse 12 auf, das im oberen Teilbereich der Figur 1 geschlossen und im unteren Teilbereich der Figur 1 im Längsschnitt dargestellt ist.

Das Gehäuse 12 weist einen Anschlussstutzen 14a zum Anschließen einer Rohrleitung 16a und mit dem Anschlussstutzen 14a fluchtend einen Anschlussstutzen 14b zum Anschließen einer Rohrleitung 16b auf. Die Ventilvorrichtung 10 könnte jedoch auch nur einen der beiden Anschlussstutzen 14a oder 14b aufweisen, so dass nachfolgend die Anschlussstutzen 14a und 14b als Anschlussstutzen 14 bezeichnet werden. In Figur 1 ist der Anschlussstutzen 14 mit unterbrochenen Linien dargestellt, da er nicht in der Zeichenebene verläuft, sondern senkrecht dazu. Mit 14' ist der tatsächliche Anschlussstutzen bezeichnet.

Das Gehäuse 12 weist weiterhin Anschlussstutzen 18a und 18b zur Verbindung der Ventilvorrichtung 10 mit Rohrleitungen 20a und 20b auf, wobei die Anschlussstutzen 18a und 18b wiederum miteinander fluchten und nachfolgend als Anschlussstutzen 18 bezeichnet werden. Der Anschlussstutzen 14 ist in Einbaulage der Ventilvorrichtung 10 oberhalb des Anschlussstutzens 18 angeordnet.

Der Anschlussstutzen 14 weist einen vorbestimmten Öffnungsquerschnitt A₁₄ und der Anschlussstutzen 18 einen vorbestimmten Öffnungsquerschnitt A₁₈ auf, die in dem gezeigten Ausführungsbeispiel gleich groß sind.

In dem Gehäuse 12 ist eine Verbindungsöffnung 22 vorhanden, über die die Anschlussstutzen 14 und 18 miteinander kommunizieren können, wenn die Verbindungsöffnung 22 wie in Figur 1b) nicht verschlossen ist. In Figur 1a) ist die Verbindungsöffnung 22 demgegenüber verschlossen.

Die Verbindungsöffnung 22 ist im gezeigten Ausführungsbeispiel ringraumförmig ausgebildet, und weist einen Öffnungsquerschnitt A₂₂ auf, der etwas größer ist als die Öffnungsquerschnitte A₁₄ bzw. A₁₈, was jedoch nicht zwingend der Fall sein muss.

In dem Gehäuse 12 ist eine Ventilanordnung 24 angeordnet, die einen ersten Ventilteller 26 und einen zweiten Ventilteller 28 aufweist, wobei der erste Ventilteller 26 oberhalb des zweiten Ventiltellers 28 angeordnet ist.

In der Verbindungsöffnung 22 sind entsprechend zwei Ventilsitze 30 und 32 vorhanden, wobei der erste Ventilteller 26 eine Dichtfläche 36 und der zweite Ventilteller 28 eine Dichtfläche 38 aufweist, wobei die Dichtfläche 36 mit dem Ventilsitz 30 und die Dichtfläche 38 mit dem Ventilsitz 32 dichtend zusammenwirkt, wenn die Ventilteller 26 und 28 wie in Figur 1a) dargestellt an den Ventilsitzen 30 und 32 anliegen. In der in Figur 1a) dargestellten Betriebsstellung der Ventilanordnung 24 ist somit der Anschlussstutzen 14 von dem Anschlussstutzen 18 sicher getrennt, sofern die Dichtflächen 36 bzw. 38 mit den Ventilsitzen 30 und 32 ordnungsgemäß zusammenwirken.

Zwischen den Ventiltellern 26 und 28 ist ein Leckageraum 34 vorhanden, in den in der Schließstellung der Ventilanordnung 24 gemäß Figur 1a) nur dann ein Medium aus den Anschlussstutzen 14 bzw. 18 eintreten kann, wenn ein oder beide Ventilteller 26 bzw. 28 mit den Ventilsitzen 30 und 32 nicht ordnungsgemäß zusammenwirken.

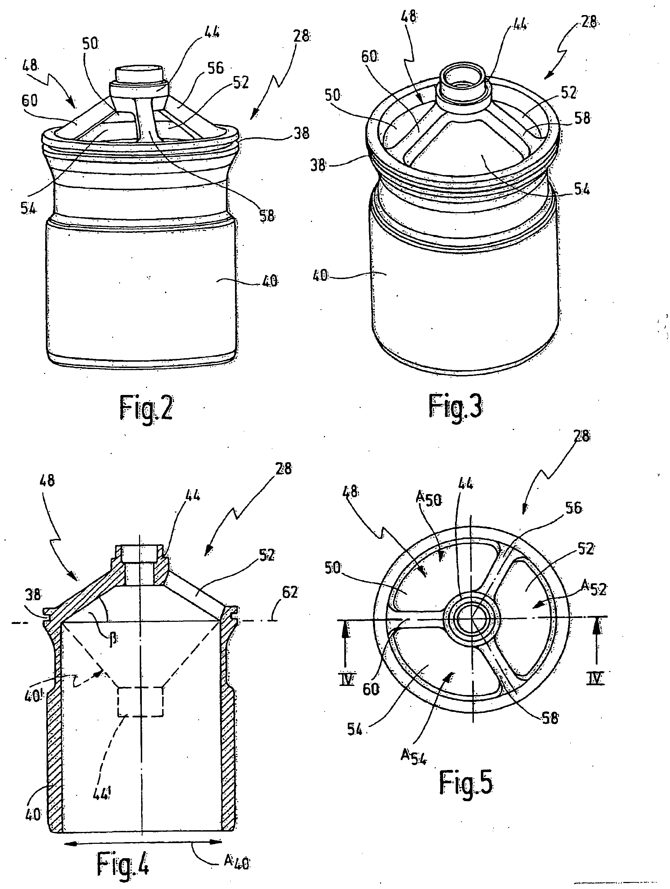

Mit Bezug auf Figuren 2 bis 5 wird hiernach der (untere) Ventilteller 28 näher beschrieben.

Der Ventilteller 28 weist ausgehend von seiner bereits erwähnten Dichtfläche 38 einen Rohrfortsatz 40 auf, der sich in der Einbaulage des Ventiltellers 28 in der Ventilvorrichtung 10 durch den Anschlussstutzen 18 hindurch erstreckt. Der Rohrfortsatz 40 ist zumindest in dem sich durch den Anschlussstutzen 18 hindurch erstreckenden Bereich vollumfänglich dicht geschlossen. Gemäß Figur 1 ist der Rohrfortsatz mit einer Ventilanordnung 42 gegen den Anschlussstutzen 18 abgedichtet.

Des Weiteren weist der Ventilteller 28 in seinem mittleren Bereich, im vorliegenden Fall mittig, einen Verbindungsabschnitt 44 auf, über den der Ventilteller 28 in seiner Einbaulage in der Ventilvorrichtung 10 mit einem Ventilschaft 46 (vgl. Figur 1) verbunden ist, um den Ventilteller 28 axial verfahren zu können.

Zwischen der Dichtfläche 38 und dem Verbindungsabschnitt 44 weist der Ventilteller 28 einen Drainageabschnitt 48 auf, der eine Mehrzahl an Drainageöffnungen aufweist, und zwar im vorliegenden Fall drei Drainageöffnungen 50, 52 und 54. Die Drainageöffnungen 50, 52, 54 münden in den Innenraum des Rohrfortsatzes 40.

Die Drainageöffnungen 50, 52 und 54 sind durch drei Rippen oder Speichen 56 und 60 voneinander getrennt, wobei die Speichen 56, 58 und 60 dazu dienen, den Verbindungsabschnitt 44 mit dem Rohrfortsatz 40 zu verbinden.

Während in dem gezeigten bevorzugten Ausführungsbeispiel drei Drainageöffnungen 50, 52 und 54 und entsprechend drei Speichen 56, 58 und 60 vorhanden sind, können auch zwei oder mehr als drei derartiger Speichen und Drainageöffnungen vorgesehen sein.

Die Speichen 56, 58 und 60 sind in einem Winkelabstand von 120° zueinander, also gleichmäßig voneinander beabstandet.

Der Hauptteil des Drainageabschnitts 48 wird von den Drainageöffnungen 50, 52, 54 eingenommen, während die Speichen 56, 58 und 60 eine geringe Materialstärke aufweisen, so dass sie nur einen geringen Teil der Gesamtfläche des Drainageabschnitts 48 einnehmen.

Der Drainageabschnitt 48 ist bezüglich einer Ebene 62, die von der Dichtfläche 38 aufgespannt wird, schräg bzw. geneigt angeordnet, wodurch die Öffnungsquerschnitte A₅₀, A₅₂ und A₅₄ der Drainageöffnungen 50, 52 und 54 vergrößert werden, weil durch die Schrägstellung des Drainageabschnitts 48 dessen Gesamtfläche vergrößert wird.

Auf diese Weise wird erreicht, dass der Gesamtöffnungsquerschnitt der Drainageöffnungen 50, 52 und 54, also die Summe der Öffnungsquerschnitte A₅₀, A₅₂ und A₅₄ ohne Durchmesservergrößerung des Ventiltellers 28 auf den Öffnungsquerschnitt A₁₄ des Anschlussstutzens 14 oder den Öffnungsquerschnitt A₁₈ des Anschlussstutzens 18 oder den Öffnungsquerschnitt A₂₂ der Verbindungsöffnung 22 im Wesentlichen angeglichen werden können. Sollten sich die Öffnungsquerschnitte A₁₄, A₁₈ unterscheiden, kann der Gesamtöffnungsquerschnitt der Drainageöffnungen 50, 52 und 54 auf den größeren der beiden Öffnungsquerschnitte A₁₄ bzw. A₁₈ angepasst werden. In dem gezeigten Ausführungsbeispiel liegt der Gesamtöffnungsquerschnitt der Drainageöffnungen 50, 52 und 54 etwa 10 % über dem Öffnungsquerschnitt A₁₄ bzw. A₁₈, die im vorliegenden Fall gleich sind. Allgemein sollte der Gesamtöffnungsquerschnitt der Drainageöffnungen 50, 52 und 54 von dem Öffnungsquerschnitt A₁₄ bzw. A₁₈ zumindest nach unten weniger als etwa 20 %, vorzugsweise weniger als 10 %, weiter vorzugsweise weniger als 5 % abweichen.

Eine andere Möglichkeit der Anpassung des Gesamtöffnungsquerschnitts der Drainageöffnungen 50, 52 und 54 kann darin bestehen, diesen Gesamtöffnungsquerschnitt an den Öffnungsquerschnitt A₂₂ der Verbindungsöffnung 22 zumindest im Wesentlichen anzugleichen. Da im vorliegenden Ausführungsbeispiel der Öffnungsquerschnitt A₂₂ der Verbindungsöffnung 22 im Wesentlichen dem Öffnungsquerschnitt A₁₄ bzw. A₁₈ entspricht, ist eine solche Anpassung im vorliegenden Fall automatisch gegeben.

Der Neigungswinkel β des Drainageabschnitts 48 in Bezug auf die Ebene 42 beträgt in dem gezeigten Ausführungsbeispiel etwa 35°, kann jedoch auch größer oder kleiner gewählt sein, um einen entsprechend großen und ausreichenden Gesamtöffnungsquerschnitt der Drainageöffnungen 50, 52 und 54 zu gewährleisten, wobei dies auch von der Breite der Speichen 56, 58 und 60 abhängt. Eine Schrägstellung bis zu 90° (Orthogonalstellung) ist dabei denkbar.

In dem gezeigten Ausführungsbeispiel gemäß Figuren 2 bis 5 erstreckt sich der Drainageabschnitt 48 des Ventiltellers 28 in Richtung von dem Rohrfortsatz 40 weg, das heißt der Verbindungsabschnitt 44 ist aus dem Rohrfortsatz 40 herausgezogen bzw. von diesem axial beabstandet.

In Figur 4 ist mit unterbrochenen Linien jedoch auch die umgekehrte nicht erfindungsgemäße Möglichkeit dargestellt, dass sich der Drainageabschnitt 48' des Ventiltellers 28 in Richtung zu dem Rohrfortsatz 40 hin erstreckt, das heißt in diesem Fall ist der Verbindungsabschnitt 44' in den Rohrfortsatz 40 hineinverlegt.

In dem gezeigten Ausführungsbeispiel ist der Drainageabschnitt 48 konisch ausgebildet, es kann jedoch auch eine von außen gesehen konvex gewölbte oder konkav gewölbte oder andere geometrische Form in Betracht gezogen werden.

Der Öffnungsquerschnitt A₄₀ des Rohrfortsatzes 40 ist ebenfalls an den Öffnungsquerschnitt A₁₄ oder A₁₈ oder A₂₂ zumindest im Wesentlichen angepasst, so dass durch den Rohrfortsatz 40 im Wesentlichen die gleiche Menge an Medium abfließen kann, die über den Anschlussstutzen 14 oder den Anschlussstutzen 18 in den Leckageraum 34 zugeführt wird.

Wieder mit Bezug auf Figur 1 weist der erste Ventilteller 26 eine an den Drainageabschnitt 48 des Ventiltellers 28 angepasste Form auf. In dem gezeigten Ausführungsbeispiel erweitert sich der erste Ventilteller 26 von seiner Mitte aus gesehen zu seiner Dichtfläche 36 schräg nach unten, so dass die beiden Ventilsitze 30 und 32 relativ nahe beieinander liegend angeordnet werden können, wie dies bei dem vorliegenden Ausführungsbeispiel der Fall ist. Wie aus Figur 1a) hervorgeht, ist der erste Ventilteller 26 im Wesentlichen komplementär zu dem Drainageabschnitt 48 des Ventiltellers 28 ausgebildet.

Im oberen Bereich der Ventilvorrichtung 10 ist ferner eine nicht näher dargestellte Antriebseinheit 62 angeordnet, die vorzugsweise pneumatisch arbeitet, und die dazu dient, die Ventilteller 26 und 28 gemeinsam oder relativ zueinander zu verfahren.
Figur 1a) zeigt die Schließstellung der Ventilanordnung 24. Sofern in dieser Schließstellung der Ventilanordnung 24 eine Leckage an der Dichtfläche 36 des Ventiltellers 26 oder an der Dichtfläche 38 des Ventiltellers 28 auftritt, tritt Leckagemedium in den Leckageraum 34 ein und wird über den Drainageabschnitt 48 des Ventiltellers 28 in den Rohrfortsatz 40 geleitet. Sofern in der Betriebsstellung in Figur 1a) durch den Rohrfortsatz 40 Medium abfließt, ist dies ein Nachweis für eine Leckagesituation.
Figur 1b) zeigt die Ventilanordnung 24 in ihrer Offen- oder Freigabestellung, in der die Verbindungsöffnung 22 geöffnet ist und die Anschlussstutzen 14 und 18 entsprechend miteinander kommunizieren.

Damit das in den Rohrleitungen 16 und 20 geführte Medium nicht in den Rohrfortsatz 40 des Ventiltellers 28 eindringt, kann der Ventilteller 26 in dieser Offenstellung so zu dem Ventilteller 28 verfahren werden, dass er mit einer axial gerichteten Dichtfläche 64 gegen den Ventilteller 28 abgedichtet ist, so dass das Medium nicht durch den Drainageabschnitt 48 in den Rohrfortsatz 40 gelangen kann.

Im Falle eines Reinigungsvorganges wird beispielsweise der Ventilteller 26 nach oben angelüftet, während der Ventilteller 28 in seiner Schließstellung in Figur 1a) verbleibt. Über den Anschlussstutzen 14 kann nun ein Reinigungsmedium, beispielsweise eine Reinigungslauge, in den Leckageraum 34 zur Reinigung der Ventilteller 26 und 28 mit hoher Flussrate und hohem Druck eingeleitet werden. Aufgrund der Tatsache, dass der Drainageabschnitt 48 Drainageöffnungen mit einem Gesamtöffnungsquerschnitt aufweist, der im Wesentlichen dem Öffnungsquerschnitt des Anschlussstutzens 14 entspricht, kann nun das Reinigungsmedium durch den Drainageabschnitt 48 und den Rohrfortsatz 40 abfließen, ohne dass sich im Leckageraum 34 zusätzlich zu dem ohnehin schon vorhandenen Druck des Reinigungsmediums ein zusätzlicher Überdruck aufbaut.

Diese ausgeglichene Bilanz zwischen Zufuhr und Abfuhr eines Mediums in und von dem Leckageraum 34 wird durch die besondere Ausgestaltung des Drainageabschnitts 48 des Ventiltellers 28 erreicht, ohne dass beispielsweise die Verbindungsöffnung 22 oder der Ventilteller 28 und damit die Ventilanordnung 24 im Durchmesser vergrößert werden müsste, und ohne dass der Öffnungsquerschnitt A₁₄ des Anschlussstutzens 14 verringert werden müsste.

## Patentansprüche

1. Ventilvorrichtung zur Trennung feindlicher Medien, mit einem Gehäuse (12), das Anschlussstutzen (14, 18) eines jeweils bestimmten Öffnungsquerschnitts (A₁₄, A₁₈) für zumindest zwei Rohrleitungen (16, 20) aufweist, die im Gehäuse (12) über eine Verbindungsöffnung (22) eines bestimmten Öffnungsquerschnitt (A₂₂) miteinander kommunizieren können, mit einer Ventilanordnung (24) zum wahlweisen Verschließen und Freigeben der Verbindungsöffnung (22), die zumindest einen Ventilsitz (32) und zumindest einen Ventilteller (28) aufweist, wobei der zumindest eine Ventilteller (28) eine mit dem zumindest einen Ventilsitz (32) zusammenwirkende Dichtfläche (38) und einen mittleren Verbindungsabschnitt (44) aufweist, der mit einem Ventilschaft (46) verbunden ist, und wobei der zumindest eine Ventilteller (28) einen Rohrfortsatz (40) aufweist, der dem Abfluss eines Mediums dient, wobei der zumindest eine Ventilteller (28) im Bereich zwischen der Dichtfläche (38) und dem Verbindungsabschnitt (44) einen Drainageabschnitt (48) mit mehreren Drainageöffnungen (50, 52, 54) aufweist, wobei der Gesamtöffnungsquerschnitt der mehreren Drainageöffnungen (50, 52, 54) an den Öffnungsquerschnitt (A₂₂) der Verbindungsöffnung und/oder an den Öffnungsquerschnitt (A₁₄, A₁₈) zumindest eines der Anschlussstutzen (14, 18) heranreicht oder größer ist, **dadurch gekennzeichnet, dass** sich der Drainageabschnitt (48) schräg zur durch die Dichtfläche (38) des zumindest einen Ventiltellers (28) aufgespannten Ebene erstreckt, indem die mehreren Drainageöffnungen (50, 52, 54) durch eine entsprechende Anzahl an Speichen (56, 58, 60) getrennt sind, die zwischen dem Verbindungsabschnitt (44) und der Dichtfläche (38) schräg verlaufen, dass der Neigungswinkel (β) des Drainageabschnitts (48) des zumindest einen Ventiltellers (28) zu der von der Dichtfläche (38) aufgespannten Ebene zumindest 30° beträgt, dass sich der Drainageabschnitt (48) des zumindest einen Ventiltellers (28) in Richtung von dem Rohrfortsatz (40) weg erstreckt, dass die Ventilanordnung (24) einen zweiten Ventilsitz (30) und einen zweiten Ventilteller (26) aufweist, wobei der zweite Ventilsitz (30) und der erste Ventilsitz (32) an der Verbindungsöffnung (22) ausgebildet sind, dass der zweite Ventilteller (26) oberhalb des ersten Ventiltellers (28) angeordnet ist und keine Drainageöffnung aufweist, und dass sich der zweite Ventilteller (26) von seiner Mitte zu seiner Dichtfläche (36) schräg nach unten erstreckt.

2. Ventilvorrichtung nach Anspruch 1, **dadurch gekennzeichnet, dass** der Gesamtöffnungsquerschnitt der Drainageöffnungen (50, 52, 54) des zumindest einen Ventiltellers (28) von dem Öffnungsquerschnitt (A₁₄, A₁₈) des zumindest einen der Anschlussstutzen (14, 18) und/oder der Verbindungsöffnung (22) nicht mehr als etwa 20 %, vorzugsweise nicht mehr als 10 %, weiter vorzugsweise nicht mehr als 5 % nach unten abweicht.

3. Ventilvorrichtung nach Anspruche 1 oder 2, **dadurch gekennzeichnet, dass** der Drainageabschnitt (48) des zumindest einen Ventiltellers (28) konisch ausgebildet ist.

4. Ventilvorrichtung nach einem der Ansprüche 1 bis 3, **dadurch gekennzeichnet, dass** der zumindest eine Ventilteller (28) zumindest drei Drainageöffnungen (50, 52, 54) aufweist, die durch zumindest drei Speichen (56, 58, 60) getrennt sind, die vorzugsweise im Winkelabstand von 120° angeordnet sind.

5. Ventilvorrichtung nach einem der Ansprüche 1 bis 4, **dadurch gekennzeichnet, dass** der Öffnungsquerschnitt (A₄₀) des Rohrfortsatzes (40) des zumindest einen Ventiltellers (28) zumindest im Wesentlichen an den Öffnungsquerschnitt (A₁₄, A₁₈) zumindest eines der Anschlussstutzen (14, 18) heranreicht oder größer ist, von diesem vorzugsweise um nicht mehr als 20 % nach unten abweicht.

6. Ventilvorrichtung nach einem der Ansprüche 1 bis 5, **dadurch gekennzeichnet, dass** der zweite Ventilteller (26) im Wesentlichen komplementär zu dem Drainageabschnitt (48) des ersten Ventiltellers (28) ausgebildet ist.

## Claims

1. A valve device for the separation of hostile media, comprising a housing (12) which has connection pieces (14, 18), each of a specific opening cross section (A₁₄, A₁₈), for at least two pipelines (16, 20) which can communicate with one another in the housing (12) via a connecting orifice (22) of a specific opening cross section (A₂₂), and a valve arrangement (24) for the selective closing and releasing of the connecting orifice (22), said valve arrangement having at least one valve seat (32) and at least one valve disk (28), the at least one valve disk (28) having a sealing face (38) cooperating with the at least one valve seat (32) and a middle connecting portion (44) which is connected to a valve stem (46), and the at least one valve disk (28) having a tubular extension (40) which serves for the outflow of a medium, the at least one valve disk (28) having, in the region between the sealing face (38) and the connecting portion (44), a drainage portion (48) with a plurality of drainage orifices (50, 52, 54), wherein the overall opening cross section of the plurality of drainage orifices (50, 52, 54) amounts at least essentially to or is larger than the opening cross section (A₂₂) of the connecting orifice and/or amounts at least essentially to or is larger than the opening cross section (A₁₄, A₁₈) of at least one of the connection pieces (14, 18) **characterized in that** the drainage portion (48) extends obliquely with respect to the plane spanned by the sealing face (38) of the at least one valve disk (28), by virtue of the fact that the plurality of drainage orifices (50, 52, 54) are separated by a corresponding number of spokes (56, 58,60) which run obliquely between the connecting portion (44) and the sealing face (38), that the angle of inclination (β) of the drainage portion (48) of the at least one valve disk (28) to the plane spanned by the sealing face (38) is at least 30°, that the drainage portion (48) of the at least one valve disk (28) extends in the direction away from the tubular extension (40), that the valve arrangement (24) has a second valve seat (30) and a second valve disk (26), the second valve seat (30) and the first valve seat (32) being formed at the connecting orifice (22), and that the second valve disk (26) is arranged above the first valve disk (28) and has no drainage orifice, and that the second valve disk (26) extends obliquely downward from its center to its sealing face (36).

2. The valve device of claim 1, **characterized in that** the overall opening cross section of the drainage orifices (50, 52, 54) of the at least one valve disk (28) deviates downward from the opening cross section (A₁₄, A₁₈) of the at least one of the connection pieces (14, 18) and/or of the connecting orifice (22) by no more than about 20%, preferably no more than 10%, further preferably no more than 5%.

3. The valve device of claim 1 or 2, **characterized in that** the drainage portion (48) of the at least one valve disk (28) is designed conically.

4. The valve device of anyone of claims 1 through 3 , **characterized in that** the at least one valve disk (28) has at least three drainage orifices (50, 52, 54) which are separated by at least three spokes (56, 58, 60) which are preferably arranged at an angular spacing of 120°.

5. The valve device of anyone of claims 1 through 4, **characterized in that** the opening cross section (A₄₀) of the tubular extension (40) of the at least one valve disk (28) amounts at least essentially to or is larger than the opening cross section (A₁₄, A₁₈) of at least one of the connection pieces (14, 18), preferably deviates downward from this by no more than 20%.

6. The valve device of anyone of claims 1 to 5, **characterized in that** the second valve disk (26) is designed essentially complementarily to the drainage portion (48) of the first valve disk (28).

## Revendications

1. Dispositif à soupape pour la séparation de fluides antagonistes, avec un boîtier (12) qui présente des raccords (14, 18) d'une section transversale d'ouverture (A₁₄, A₁₈) déterminée respectivement pour au moins deux conduites (16, 20) qui peuvent communiquer entre elles dans le boîtier (12) par une ouverture de liaison (22) d'une section transversale d'ouverture déterminée (A₂₂), avec un ensemble de soupape (24) pour la fermeture et la libération au choix de l'ouverture de liaison (22), lequel ensemble présente au moins un siège de soupape (32) et au moins une tête de soupape (28), sachant qu'au moins une tête de soupape (28) présente une surface étanche (38) coagissant avec au moins un siège de soupape (32) et une section de liaison (44) médiane qui est reliée à une tige de soupape (46), et sachant qu'au moins une tête de soupape (28) présente un prolongement tubulaire (40) qui sert à l'évacuation d'un fluide, sachant qu'au moins une tête de soupape (28) présente dans la zone entre la surface étanche (38) et la section de liaison (44) une section de drainage (48) avec plusieurs ouvertures de drainage (50, 52, 54), sachant que la section transversale d'ouverture entière des plusieurs ouvertures de drainage (50, 52, 54) est égale ou supérieure à la section transversale d'ouverture (A₂₂) de l'ouverture de liaison et/ou à la section transversale d'ouverture (A₁₄, A₁₈) au moins de l'un des raccords (14, 18), **caractérisé en ce que** la section de drainage (48) s'étend en biais par rapport au plan défini par la surface étanche (38) d'au moins une tête de soupape (28), en séparant les plusieurs ouvertures de drainage (50, 52, 54) par un nombre correspondant de rayons (56, 58, 60) qui s'étendent en biais entre la section de liaison (44) et la surface étanche (38), que l'angle d'inclinaison (β) de la section de drainage (48) d'au moins une tête de soupape (28) par rapport au plan défini par la surface étanche (38) s'élève à au moins environ 30°, que la section de drainage (48) d'au moins une tête de soupape (28) s'étend en direction inverse du prolongement tubulaire (40), que l'ensemble de soupape (24) présente un deuxième siège de soupape (30) et une deuxième tête de soupape (26), sachant que le deuxième siège de soupape (30) et le premier siège de soupape (32) sont réalisés sur l'ouverture de liaison (22), et **en ce que** la deuxième tête de soupape (26) est disposée au-dessus de la première tête de soupape (28) et ne présente aucune ouverture de drainage, et que la deuxième tête de soupape (26) s'étend en biais vers le bas de son milieu vers sa surface étanche (36).

2. Dispositif à soupape selon la revendication 1, **caractérisé en ce que** la section transversale d'ouverture entière des ouvertures de drainage (50, 52, 54) d'au moins une tête de soupape (28) diverge vers le bas de la section d'ouverture (A₁₄, A₁₈) d'au moins l'un des raccords (14, 18) et/ou de l'ouverture de liaison (22) d'environ 20 % au maximum, de préférence de 10 % au maximum, de manière davantage préférée de 5 % au maximum.

3. Dispositif à soupape selon la revendication 1 ou 2, **caractérisé en ce que** la section de drainage (48) d'au moins une tête de soupape (28) est réalisée conique.

4. Dispositif à soupape selon l'une quelconque des revendications 1 à 3, **caractérisé en ce qu'**au moins une tête de soupape (28) présente au moins trois ouvertures de drainage (50, 52, 54) séparées par au moins trois rayons (56, 58, 60) qui sont disposés de préférence à une distance angulaire de 120°.

5. Dispositif à soupape selon l'une quelconque des revendications 1 à 4, **caractérisé en ce que** la section transversale d'ouverture (A₄₀) du prolongement tubulaire (40) d'au moins une tête de soupape (28) est égale au moins sensiblement ou est supérieure à la section transversale d'ouverture (A₁₄, A₁₈) au moins de l'un des raccords (14, 18), diverge de celle-ci vers le bas de préférence de 20 % au maximum.

6. Dispositif à soupape selon l'une quelconque des revendications 1 à 5, **caractérisé en ce que** la deuxième tête de soupape (26) est réalisée de manière sensiblement complémentaire à la section de drainage (48) de la première tête de soupape (28).
